# EUROPÄISCHE PATENTSCHRIFT

(11) **EP 4 008 048 B1**
(45) Veröffentlichungstag und Bekanntmachung des Hinweises auf die Patenterteilung: **22.05.2024**
(21) Anmeldenummer: 20789455.1
(22) Anmeldetag: 22.09.2020
(51) Int. Cl.: H02K 1/32, H02K 9/22, H02K 7/00

(54) **ANTRIEBSWELLE EINER DYNAMOELEKTRISCHEN MASCHINE UND DEREN HERSTELLUNGSVERFAHREN**
DRIVE SHAFT OF DYNAMO-ELECTRIC MACHINE AND PRODUCTION METHOD OF SAME
ARBRE D'ENTRAÎNEMENT D'UNE MACHINE DYNAMOÉLECTRIQUE ET SON PROCÉDÉ DE FABRICATION

(30) Priorität: 30.09.2019 EP 19200500
(43) Veröffentlichungstag der Anmeldung: 08.06.2022
(73) Patentinhaber: Innomotics GmbH, 90441 Nürnberg (DE)
(72) Erfinder: HÖSLE, Markus, 91058 Erlangen (DE)
(74) Vertreter: Siemens Patent Attorneys
(86) Internationale Anmeldenummer: PCT/EP2020/076397
(87) Internationale Veröffentlichungsnummer: WO 2021/063745

(56) Entgegenhaltungen:
- WO-A1-2017/104560
- WO-A1-2018/059844
- DE-A1-102006 045 178
- DE-A1-102016 124 632
- FR-A1- 3 065 124
- GB-A- 2 558 368
- JP-A- S5 577 350
- JP-A- H06 141 509
- JP-A- H06 178 501
- JP-A- 2002 017 066

## Beschreibung

Die Erfindung betrifft eine Antriebswelle einer dynamoelektrischen Maschine.

Darüber hinaus betrifft die Erfindung eine dynamoelektrische Maschine mit mindestens einer solchen Antriebswelle.

Außerdem betrifft die Erfindung eine Arbeitsmaschine mit mindestens einer dynamoelektrischen Maschine der vorgenannten Art.

Obendrein betrifft die Erfindung ein Verfahren zum Herstellen einer vorgenannten Antriebswelle.

Des Weiteren betrifft die Erfindung ein Computerprogramm, welches ein digitalisiertes Abbild umfasst, wobei das digitalisierte Abbild zum Simulieren der vorgenannten Antriebswelle oder der vorgenannten dynamoelektrischen Maschine konfiguriert ist.

Außerdem betrifft die Erfindung einen digitalen Zwilling der vorgenannten dynamoelektrischen Maschine oder der vorgenannten Arbeitsmaschine.

Darüber hinaus betrifft die Erfindung einen digitalen Zwilling, der ein digitalisiertes Abbild der vorgenannten Antriebswelle umfasst.

Antriebswellen von Arbeitsmaschinen, wie Lüfter, Kompressoren, Kränen, Spindeln werden meist von dynamoelektrischen Maschinen angetrieben (siehe z.B. WO 2018/059844 A1, JP 2014 220996 A, JP 2016 149898 A, DE 42 30 379 A1, DE 199 00 559 C1, WO 2017/050447 A1 oder FR 3 065 124 A1).

Diese Wellen sind oft mit einem Rotor der dynamoelektrischen Maschine drehfest verbunden und in einem oder mehreren Lagern gelagert. Aufgrund der dabei erforderlichen mechanischen Festigkeit sind diese Wellen aus Materialien geschmiedet, gedreht oder gegossen. Diese Materialien transportieren auch Wärme vergleichsweise gut. Dabei wird jedoch Wärme aus unterschiedlichen Wärmequellen an die Antriebswellen gekoppelt. Beispielsweise kann somit ein Lagerinnenring mit dem Blechpaket des Rotors wärmetechnisch in Verbindung stehen. Ebenso wie Komponenten der Arbeitsmaschine mit Bestandteilen der dynamoelektrischen Maschine, wie z.B. Lagern oder dem Rotor wärmetechnisch in Verbindung stehen können. Dies bedeutet beispielsweise, dass die Wärme von einer Wärmequelle mit einer höheren Temperatur zu einer Wärmequelle mit einer niederen Temperatur "fließt". Das kann beispielsweise zur Aufheizung der Lager und damit gegebenenfalls zur Beeinträchtigung der Schmiereigenschaften führen.

Darüber hinaus können bei einer derartigen Antriebsanordnung auch Lagerströme auftreten, die die Laufbahnen der Lager, insbesondere Wälzlager schädigen können.

Ein möglicher Ansatz, dem vorgenannten Problem zu begegnen und beispielsweise Beeinträchtigung der Schmiereigenschaften zu vermeiden, besteht darin, temperaturbeständigeres Schmiermittel in den Lagern einzusetzen. Dies kann aber aus Wartungs-, Wärmeableitungseffizienz- und Kostengründen unerwünscht sein.

Die Aufgabe der vorliegenden Erfindung besteht darin, eine Antriebswelle zu schaffen, die bei verbesserten Wärmeübertragungseigenschaften einfacher zu warten und günstiger herzustellen ist.

Die Aufgabe wird mit einer Antriebswelle nach Anspruch 1 gelöst.

In anderen Worten umfasst die Antriebswelle zumindest zwei thermoisolierenden Schichten, die zumindest zwei Wärmeleitungs-Pfade definieren diese mindestens zwei Wärmeleitungs-Pfade voneinander thermisch trennen.

Mit einem derartigen Wellenaufbau können auch Lagerströme vermieden werden.

Der Erfindung liegt somit die Erkenntnis zugrunde, dass Wärme von Wärmequellen von unterschiedlichem Temperaturniveau entlang unterschiedlicher Wärmeleitungs-Pfade isoliert voneinander zu einer Wärmesenke geführt werden können.

Im Zusammenhang mit der vorliegenden Erfindung wird unter dem Begriff "Wärmequelle" auch mehrere Wärmequellen von ähnlichem Temperaturniveau verstanden. Die Wärme von solchen Wärmequellen kann über den gleichen Wärmeleitungs-Pfad zur Wärmesenke geführt werden.

Bei einer Ausführungsform kann mit Vorteil vorgesehen sein, dass ein erstes Ende eines jeden Wärmeleitungs-Pfads an eine Wärmequelle und ein zweites Ende dieses Wärmeleitungs-Pfads an eine Wärmesenke thermisch ankoppelbar ist, wobei die unterschiedlichen Wärmequellen an die unterschiedlichen Wärmeleitungs-Pfade thermisch ankoppelbar sind und die Wärmequellen höhere Temperatur als die Wärmesenke aufweisen.

Von dem Begriff Wärmequelle können auch mehrere unterschiedliche Wärmequellen umfasst sein, wenn diese Wärmequellen in etwa gleiches Temperaturniveau aufweisen.

Außerdem kann mit Vorteil vorgesehen sein, dass die unterschiedlichen, voneinander thermisch getrennten Wärmeleitungs-Pfade aus unterschiedlichem Material ausgebildet sind. Als Materialien werden dabei je nach thermischer und mechanischer Anforderung an die Antriebswelle unterschiedlichste Stähle, Metalle, Legierungen und Kunststoffe eingesetzt.

Erfindunsgemäss, sind die Wärmeleitungs-Pfade durch entsprechende Schicht oder Schichten voneinander thermisch getrennt, wobei jede Schicht ein Material umfasst, vorzugsweise aus diesem Material besteht, dessen Wärmeleitfähigkeit schlechter als die Wärmeleitfähigkeit der Wärmeleitungs-Pfade ist.

Außerdem kann bei jenen Wärmeleitungs-Pfaden, die an eine äußere Mantelfläche der Antriebswelle zumindest teilweise angrenzen, zweckmäßig sein, diese Wärmeleitungs-Pfade von der äußeren Mantelfläche der Antriebswelle thermisch zu trennen, z.B. durch Versehen mindestens einer weiteren thermoisolierenden Schicht. Dabei kann diese mindestens eine Schicht ein Material umfassen, vorzugsweise aus diesem Material bestehen, dessen Wärmeleitfähigkeit schlechter als die Wärmeleitfähigkeit des die Antriebswelle umgebenden Mediums, z.B. der Luft ist.

Es kann zweckdienlich sein, wenn zumindest einer der Wärmeleitungs-Pfade, vorzugsweise jeder Wärmeleitungs-Pfad eine monolithische Struktur bildet.

Weitere Vorteile ergeben sich, wenn die unterschiedlichen Wärmeleitungs-Pfade elektrisch voneinander getrennt sind.

Bei einer besonders bevorzugten Ausführungsform kann mit Vorteil vorgesehen sein, dass die Wärmeleitungs-Pfade koaxial angeordnet sind.

Des Weiteren kann mit Vorteil vorgesehen sein, dass jeder Wärmeleitungs-Pfad im Querschnitt in etwa die Form eines Kreissegments, eines Ringsegments, oder eines Kreisringsegments aufweist.

Ferner kann mit Vorteil vorgesehen sein, dass die Antriebswelle eine Aufnahme aufweist, die zum Aufnehmen mindestens einer Wärmesenke eingerichtet ist und vorzugsweise mit der Antriebswelle koaxial angeordnet ist.

Um keinem Wärmefluss von der Arbeitsmaschine ausgesetzt zu sein, kann es zweckmäßig sein, wenn die Antriebswelle eine thermische Blockade aufweist, die einen Wärmefluss in Axialrichtung zwischen einem ersten Teil, beispielsweise einem ersten Axialabschnitt der Antriebswelle und einem zweiten Teil, beispielsweise einem zweiten Axialabschnitt der Antriebswelle verhindert.

Die Aufgabe wird auch mit einer dynamoelektrischen Maschine mit mindestens einer oben beschriebenen Antriebswelle gelöst.

Bei einer bevorzugten Ausführungsform kann die Maschine mindestens zwei Wärmequellen mit jeweils unterschiedlicher Temperatur und mindestens eine Wärmesenke umfassen, wobei die unterschiedlichen Wärmequellen an die unterschiedlichen, voneinander thermisch getrennten Wärmeleitungs-Pfade derart thermisch gekoppelt sind, dass die Wärme von den unterschiedlichen Wärmequellen entlang der unterschiedlichen Wärmeleitungs-Pfade isoliert zu der mindestens einen Wärmesenke fließen kann.

Vorzugsweise ist jede Wärmequelle an jeweils einen Wärmeleitungs-Pfad thermisch gekoppelt und umgekehrt, so dass zwischen den Wärmequellen und Wärmeleitungs-Pfaden eine Eins-zueins-Korrespondenz besteht.

Es kann darüber hinaus vorgesehen sein, dass mindestens eine der Wärmequellen als ein, vorzugsweise an der Antriebswelle drehfest fixierter Rotorabschnitt oder als ein Lager, in dem die Antriebswelle vorzugsweise gelagert ist und insbesondere mit diesem mechanisch verbunden ist, ausgebildet ist.

Außerdem kann vorgesehen sein, dass die Wärmesenke als ein Lüfter oder ein Wärmetauscher ausgebildet ist.

Es kann zweckdienlich sein, wenn an der Wärmesenke keine weiteren Wärmekopplungen vorgesehen sind.

Darüber hinaus kann es zweckdienlich sein, wenn der Lüfter an die Antriebswelle wärmetechnisch gekoppelt ist.

Weitere Vorteile ergeben sich, wenn die Wärmesenke ein Kühlmedium, z.B. Luft umfasst, um an dieses Kühlmedium die Wärme abzugeben. Eine thermische Kopplung kann sich erst sodann über das Kühlmedium einstellen.

Es kann zweckdienlich sein, wenn die Maschine ferner eine Wärme-Trennvorrichtung umfasst, wobei die Wärme-Trennvorrichtung derart ausgebildet und an der Antriebswelle derart angeordnet ist, dass die Wärme nach dem Auskoppeln aus den unterschiedlichen Wärmeleitungs-Pfaden weiter entlang voneinander thermisch isolierter Pfade von der Maschine abfließen kann.

Es kann vorgesehen sein, dass die Wärmesenke die vorgenannte Wärme-Trennvorrichtung umfasst. Auf diese Weise kann sich die Trennung der Wärme in der Wärmesenke, z.B. in dem Lüfter oder in dem Wärmetauscher fortsetzen.

Außerdem wird die Aufgabe mit einem Verfahren nach Anspruch 12 zur Herstellung der oben beschriebenen Antriebswelle für die oben beschriebene dynamoelektrische Maschine gelöst, wobei das Verfahren folgende Schritte umfasst:
- Rechnergestütztes Konstruieren eines dreidimensionalen Modells der vorgenannten Antriebswelle aufgrund einer Verteilung von Wärmequellen und vorzugsweise -senke(n) in der dynamoelektrischen Maschine entlang der Antriebswelle;
- Herstellen der Antriebswelle gemäß dem konstruierten dreidimensionalen Modell mittels eines Additive-Manufacturing- bzw. eines 3D-Druck-Verfahrens.

Dabei kann es vorgesehen sein, dass die Herstellung der Antriebswelle durch das Additive-Manufacturing- bzw. eines 3D-Druck-Verfahren entweder entlang oder quer zur Axialrichtung der Antriebswelle erfolgt. Dies bedeutet, dass das Auftragen von Schichten entweder entlang oder quer zur Axialrichtung der Antriebswelle erfolgen kann.

Erfindungsgemäss erfolgt das Ausbilden der Wärmeleitungs-Pfade, ihrer wärmetechnischen Trennung, wie z.B. das Ausbilden von den entsprechenden Schichten, oder der Blockade mittels des Additive-Manufacturing- bzw. des 3D-Druck-Verfahrens.

Somit liegt der Erfindung auch jene Erkenntnis zugrunde, dass eine Antriebswelle mittels eines Additive-Manufacturing- bzw. eines 3D-Druck-Verfahrens derart aus unterschiedlichen Schichten/Materialen gestaltet werden kann, dass nahezu jede Wärmequelle innerhalb der Antriebswelle ihren eigenen "thermischen Pfad" - Wärmeleitungs-Pfad - zur Wärmesenke hat. Dabei ist der Ausgangspunkt der Herstellung einer derartigen Welle die Kenntnis der Verteilung der Wärmequellen entlang der Antriebswelle. In anderen Worten ist jeder Wärmequelle ihr eigener Andockpunkt an der Welle zugeordnet, wobei die Gesamtheit der Andockpunkte axial und/oder radial und/oder in Umfangsrichtung verteilt sind.

Summa summarum lässt sich mittels eines Additive-Manufacturing- bzw. eines 3D-Druck-Verfahrens eine Antriebswelle herstellen, die nicht nur der Drehmomentenübertragung auf eine Arbeitsmaschine dient, sondern auch ein ausgewogenes und effizientes Wärmemanagement z.B. einer dynamoelektrischen Maschine und deren Arbeitsmaschine gewährleistet, indem Wärmequellen, die thermisch mit der Welle gekoppelt sind, unabhängig voneinander kühlbar sind.

Die Erfindung samt weiteren Vorteilen ist im Folgenden an Hand beispielhafter Ausführungsformen näher erläutert, die in der Zeichnung veranschaulicht sind. In dieser zeigt
- FIG 1: eine dynamoelektrische Maschine mit einer Antriebswelle;
- FIG 2: einen Querschnitt der Antriebswelle der FIG 1;
- FIG 3: einen Querschnitt einer Antriebswelle gemäß einer weiteren bevorzugten Ausführungsform;
- FIG 4: eine Antriebswelle mit einer Blockade;
- FIG 5: eine Antriebsmaschine bzw. -system mit einer dynamoelektrischen Maschine, und
- FIG 6: eine Antriebsmaschine bzw. -system mit einer Antriebswelle.

Im Folgenden bezeichnen - sofern nicht anders angegeben-gleiche Bezugszeichen gleiche Merkmale.

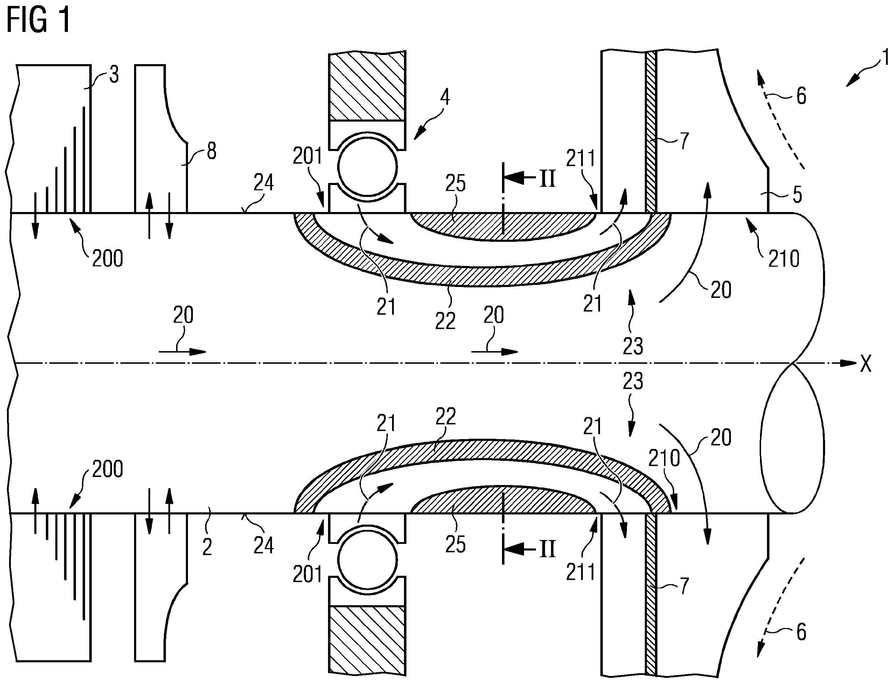

Zunächst wird auf die FIG 1 Bezug genommen. FIG 1 zeigt in einer Detaildarstellung eine dynamoelektrische Maschine 1 mit einer Antriebswelle 2, die der erfindungsgemäßen Antriebswelle entspricht. Auf der Antriebswelle 2 ist ein Rotorabschnitt 3 drehfest fixiert. Ferner ist in der FIG 1 ein Lager 4 der Antriebswelle 2 zu sehen. Die Antriebswelle 2 kann in dem Lager 4 gelagert und mit dieser mechanisch verbunden sein.

Der Rotor und das Lager sind Beispiele von Wärmequellen, deren Wärme an die Antriebswelle 2 gekoppelt wird. Um diese Wärme effizienter abzuleiten, weist die Antriebswelle 2 zwei unterschiedliche, voneinander thermisch getrennte Wärmeleitungs-Pfade 20, 21 auf, die sich beispielsweise entlang einer Axialrichtung X der Antriebswelle 2 erstrecken. Eine Richtung, in die die Wärme in dem gezeigten Beispiel abgeleitet wird, ist mit Pfeilen verdeutlicht (Wärmestromrichtung). Diese Richtung kann der Axialrichtung X der Antriebswelle 2 parallel sein. Die Wärmeleitungs-Pfade 20, 21 können aus demselben oder aus verschiedenen Materialien ausgebildet sein. Die Wärmeleitungs-Pfade 20, 21 können beispielsweise durch eine Schicht 22 eines Materials thermisch getrennt sein, dessen Wärmeleitfähigkeit schlechter als die Wärmeleitfähigkeit beider Wärmeleitungs-Pfade 20, 21 ist. Vorzugsweise ist jeder Wärmeleitungs-Pfad 20, 21 monolithisch.

Jeder Pfad 20 bzw. 21 weist zwei Enden 200, 210 bzw. 201, 211 auf. Es ist zweckdienlich, wenn die Enden des jeweiligen Wärmeleitungs-Pfades räumlich voneinander getrennt sind (siehe FIG 1). Die Wärme kann in ein Ende 200, 201 des entsprechenden Wärmeleitungs-Pfads 20, 21 ein- und aus dem anderen Ende 210, 211 auskoppeln. Figur lässt erkennen, dass der Rotorabschnitt 3 an ein erstes Ende 200 eines ersten Wärmeleitungs-Pfads 20 thermisch ankoppelt und das Lager 4 an ein erstes Ende 201 eines zweiten Wärmeleitungs-Pfads 21 thermisch ankoppelt. Die Wärme aus unterschiedlichen Wärmequellen 3, 4 fließt (siehe Pfeilrichtungen) dank thermischer Trennung entlang der unterschiedlichen Pfade 20, 21 und koppelt aus jeweils einem zweiten Ende 210, 211 des entsprechenden Wärmeleitungs-Pfads 20, 21 aus der Antriebswelle 2 aus.

Die zweiten Enden der unterschiedlichen Wärmeleitungs-Pfade stehen sind mit einer Wärmesenke wärmetechnisch gekoppelt. Als Wärmesenke kann beispielsweise ein mit der Antriebswelle 2 thermisch in Kontakt stehender Lüfter 5 oder ein Wärmetauscher (nicht gezeigt) oder ein Kühlmedium, z.B. Luft, fungieren. Eine beispielhafte Stromrichtung 6 von Kühlluft ist ebenfalls FIG 1 zu entnehmen. Der Lüfter 5 zieht die Wärme der Antriebswelle 2 ab und gibt sie an das Kühlmedium ab.

Bei der Maschine 1 kann außerdem eine Wärme-Trennvorrichtung 7 vorgesehen sein. Diese Trennvorrichtung ist derart ausgebildet und steht mit der Antriebswelle 2 derart in Kontakt, dass die Wärme die aus dem zweiten Ende eines Wärmeleitungs-Pfads (z.B. des Wärmeleitungs-Pfads 21) nicht in das zweite Ende des anderen Wärmeleitungs-Pfads (z.B. des Wärmeleitungs-Pfads 20) wieder einkoppeln kann. Dadurch kann eine thermische Trennung außerhalb der Antriebswelle 2 ermöglicht werden, um auch dort die thermische Kopplung gering zu halten und damit einen Wärmefluss "zurück" zu der jeweiligen Wärmequelle (z.B. Rotorabschnitt 3 oder Lager 4) zu reduzieren.

Obendrein können dadurch sogenannte "thermische Rückschlüsse" weitestgehend vermieden und gleichzeitig die Effizienz der Wärmeableitung verbessert werden. Die Wärme-Trennvorrichtung 6 kann beispielsweise eine Trennwand aus einem nicht wärmeleitfähigen Material oder zumindest einem Material, dessen Wärmeleitfähigkeit schlechter als die Wärmeleitfähigkeit der Luft ist. Beispielsweise kann dasselbe Material verwendet werden, aus dem die Schicht 22 ausgebildet ist.

Der vorgenannte Lüfter 5, z.B. ein Eigenlüfter, kann an jenem Wellenende 23 der Antriebswelle 2 fixiert sein, dass die Wärme abgebenden Wärmequellen - hier dem Rotorabschnitt 3 und das Lager 4 - in Axialrichtung X nachgeordnet ist. Das Wellenende 23 steht vorzugsweise mit einer Wärmesenke, wie z.B. Kühlmedium 6, Lüfter 5 oder Wärmetauscher (nicht gezeigt) in thermischem Kontakt. Dadurch kann die Konvektion in der dynamoelektrischen Maschine noch weiter verbessert werden. Die FIG 1 lässt erkennen, dass der Lüfter 7 sowohl an die zweiten Enden 210, 211 beider Wärmeleitungs-Pfade 20, 21 thermisch angekoppelt sein kann bzw. in wärmeleitfähigem Kontakt stehen kann. Darüber hinaus ist in FIG 1 erkennbar, dass die vorgenannte Wärme-Trennvorrichtung 7 ein Teil des Lüfters 5 sein kann. Es ist durchaus denkbar, dass mit den zweiten Enden unterschiedlicher Wärmeleitungs-Pfade unterschiedliche Lüfter in wärmeleitendem Kontakt stehen - dadurch können unterschiedliche Wärmeleitungs-Pfade unterschiedliche Wärmesenken haben.

Zusätzlich kann auch innerhalb der dynamoelektrischen Maschine 1 ein Hilfswärmeelement 8 (z.B. ein weiterer Lüfter) vorgesehen sein, das entweder Wärme an den Innenraum der dynamoelektrischen Maschine 1 abgibt, oder von dort Wärme aufnimmt und dem Lüfter 5 über einen der Wärmepfade - hier über den ersten Wärmeleitungs-Pfad 20 - zuführt. An dieser Stelle sei betont, dass an jeden Wärmeleitungs-Pfad auch mehrere unterschiedliche Wärmequellen von ähnlichem Temperaturniveau gekoppelt sein können. In dem oben beschriebenen Ausführungsbeispiel sind diese Wärmequelle: der Rotorabschnitt 3 und das Hilfswärmeelement 8.

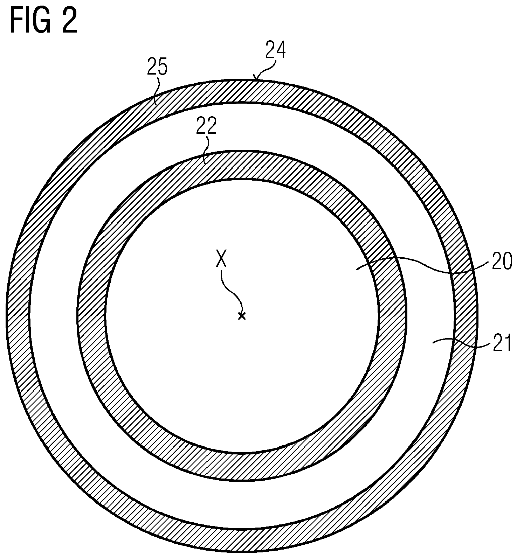

FIG 2 zeigt eine Schnittdarstellung der FIG 1. Die Antriebswelle 2 kann beispielsweise als einer Vollwelle ausgebildet sein. Eine Zusammenschau der FIG 1 und FIG 2 lässt erkennen, dass die Wärmeleitungs-Pfade 20, 21 koaxial angeordnet sein können. Dabei kann der zweite Wärmeleitungs-Pfad 21 in Radialrichtung kreisförmig und in Axialrichtung U-förmig sein. Der zweite Wärmeleitungs-Pfad 21 kann - mit Ausnahme seiner zwei Enden 201, 211 - von einer äußeren Mantelfläche 24 der Antriebswelle 2 durch eine weitere Schicht 25 aus einem Material thermisch getrennt sein, dessen Wärmeleitfähigkeit zumindest schlechter als die Wärmeleitfähigkeit der Luft ist. Hierdurch kann die Wärmeübertagung durch den zweiten Pfad 21 weiter verbessert werden. Der erste Wärmeleitungs-Pfad 20 kann teilweise nicht thermisch isoliert bleiben: der FIG 1 ist zu entnehmen, dass zwischen dem größeren Teil des ersten Wärmeleitungs-Pfads 20 und der äußeren Mantelfläche 24 der Antriebswelle 2 keine Wärmeisolierschicht vorgesehen ist. Eine solche Schicht ist aber natürlich denkbar und kann verwendet werden, um Konvektionseigenschaften des ersten Wärmeleitungs-Pfads 20 zu verbessern.

FIG 2 ist zu entnehmen, dass die thermoisolierende Schicht 22 und die weitere thermoisolierende Schicht 25 in der Antriebswelle 2 einen Zwischenraum definieren, der den Wärmeleitungs-Pfad 21 bildet. Der andere Wärmeleitungs-Pfad 20 ist durch einen Raum gebildet, der zwischen der thermoisolierenden Schicht 22 und der äußeren Mantelfläche 24 der Antriebswelle 2 definiert ist.

FIG 2 lässt insbesondere erkennen, dass die Wärmeleitungspfade 20, 21 in Umfangsrichtung der Antriebswelle 2 (in sich) geschlossen sein können. Dadurch ist es möglich, Wärme von einer Wärmequelle beispielsweise von einem Lager 4 bei einem beliebigen Rotationswinkel der Antriebswelle 2 abzuführen. In anderen Worten, während sich die Antriebswelle 2 rotiert, können die Wärmeleitungs-Pfade 20, 21 aufgrund ihrer geschlossenen Form die Wärme von den Wärmequellen ununterbrochen abführen. Dadurch kann die Effizienz der Wärmeabfuhr gesteigert werden.

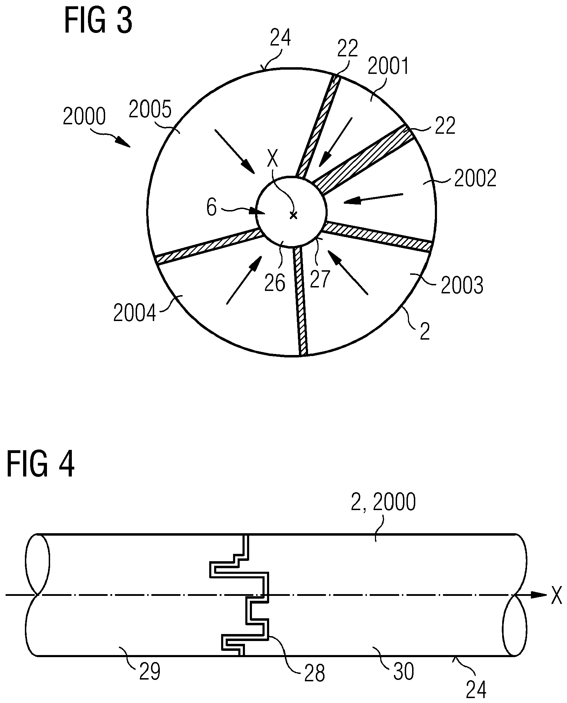

FIG 3 zeigt einen Schnitt einer Antriebswelle 2000 quer zu ihrer Axialrichtung X gemäß einer weiteren bevorzugten Ausführungsform. Die FIG 3 verdeutlicht, dass die vorgenannten Wärmeleitungs-Pfade 20, 21 eine andere geometrische Form aufweisen können. Die wärmeleitfähigen Pfade 2001, 2002, 2003, 2004, 2005 der Welle 2000 können auch - je nach Wärmequelle - in Umfangrichtung betrachtet segmentartig aufgebaut sein. Dies hängt von der jeweiligen thermischen Kopplung der jeweiligen Wärmequelle an die Antriebswelle 2000 ab.

FIG 3 lässt erkennen, dass die Wärmeleitungs-Pfade 2001 bis 2005 im Querschnitt als Ringsegmente, insbesondere als Kreisringsegmente der im Querschnitt ringförmigen, insbesondere kreisringförmigen Hohlwelle 2000 ausgebildet sein können. Dabei kann die Wärme und solchen Wärmequellen effizienter abgeführt werden, die sich mit der Antriebswelle 2000 mit rotieren können, beispielsweise der Antriebswelle 2000 fest verbindbar sind. Die Wärmeleitungs-Pfade 2001 bis 2005 können durch Zwischenräume gebildet sein, die zwischen den thermoisolierenden Schichten 22 definiert sind. Jede isolierende Schicht 22 kann sich von einer äußeren Mantelfläche 24 der Antriebswelle 2000 bis hin zu einer inneren Mantelfläche 27 der Antriebswelle 2000 erstrecken.

Darüber hinaus lässt die FIG 3 erkennen, dass die Antriebswelle 2000 in ihrem Inneren eine Aufnahme 26 bzw. eine Aushöhlung aufweisen kann. Diese beispielsweise mit der Antriebswelle 2000 koaxial angeordnete Aufnahme 26 dient vorzugsweise als Wärmesenke(n). Insbesondere kann durch die Aufnahme ein Kühlmittel 6, z.B. Luft, fließen und eine Wärmeübertragung entlang des jeweiligen Wärmeleitungs-Pfads 2001 bis 2005 von der äußeren Mantelfläche 24 zu der inneren Mantelfläche 27 der Hohlwelle 2000 ermöglichen. Es versteht sich, dass auch bei dieser Ausführungsform entsprechende, bereits beschriebene technische Merkmale beispielsweise zur Vermeidung der "thermischen Kurzschlüsse" oder zur Verbesserung der Konvektionseigenschaften vorgesehen sein können, ohne dass es eine gesonderte Anpassung anderer Merkmale notwendig wäre.

Um auch von einer Arbeitsmaschine (nicht gezeigt) keinem Wärmefluss ausgesetzt zu sein, kann die Welle 2, 2000 zusätzlich mit einer thermischen und/oder elektrischen Blockade 28 ausgestattet sein (FIG 4). Diese Blockade 28 kann beispielsweise in Form einer mechanischen Kupplung ausgeführt sein und zum Verbinden eines ersten Teils 29 mit einem zweiten Teil 30 der Antriebswelle 2, 2000 eingerichtet sein. Die Blockade 28 kann labyrinthähnlich verlaufen.

Die oben beschriebene Antriebswelle 2, 2000 kann mit Hilfe eines Additive-Manufacturing-Verfahrens bzw. eines 3D-Druck-Verfahrens hergestellt werden. Dabei dient als Ausgangspunkt der Herstellung einer derartigen Welle 2, 2000 die Kenntnis der Verteilung der Wärmequellen 3, 4 und vorzugsweise der Wärmesenke(n) 5, 6 entlang der Antriebswelle 2, 2000. Jede Wärmequelle 3, 4 weist ihre Andockpunkte bzw. -stellen an der Antriebswelle 2, 2000 auf, die axial und/oder radial und/oder in Umfangsrichtung verteilt sind. Durch diese Andockstellen können beispielsweise die Positionen der (ersten) Enden 200, 201 der Wärmeleitungs-Pfade 20, 21 bestimmt/vorgegeben werden. Anhand dieser Kenntnis kann ein 3D-Modell der herzustellenden Antriebswelle 2, 2000 auf einem Computer konstruiert werden. Dieses Modell dient als Input für ein Additive-Manufacturing-Verfahren oder ein 3D-Druck-Verfahren, mit dem aus unterschiedlichen Schichten/Materialen die Antriebswelle 2, 2000 mit den mindestens zwei unterschiedlichen, voneinander thermisch getrennten Wärmeleitungs-Pfaden 20, 21, 2001, 2002, 2003, 2004, 2005 hergestellt wird.

Die vorgenannte Blockade 28 kann beispielsweise ebenfalls mittels des Additive-Manufacturing-Verfahrens ausgebildet sein.

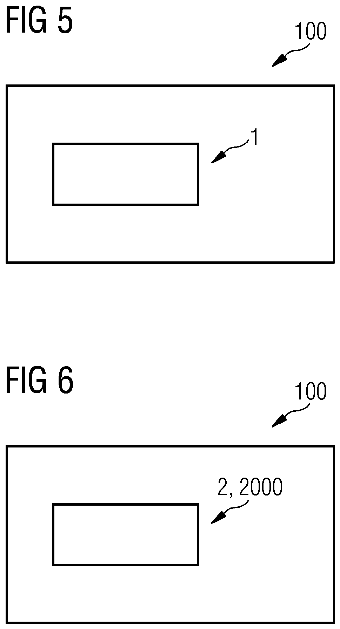

FIG 5 zeigt beispielhaft eine Antriebsmaschine bzw. -system 100 mit der vorgenannten dynamoelektrischen Maschine 1.

FIG 6 zeigt beispielhaft eine Antriebsmaschine bzw. -system 100 mit einer der vorgenannten Antriebswellen 2, 2000.

An dieser Stelle sei angemerkt, dass die Figuren 1 bis 4 Screenshots aus einem erfindungsgemäßen Computerprogramm bzw. aus erfindungsgemäßen digitalen Zwillingen sein können. Somit zeigen die Figuren 1 bis 4 auch ein digitalisiertes Abbild der Antriebswelle 2, 2000 sowie alle anderen oben beschriebenen Merkmale der Antriebswelle 2, 2000.

Mit dem genannten Computerprogramm und/oder dementsprechenden digitalen Zwilling ist es beispielsweise möglich, den Wärmefluss innerhalb der Antriebswelle 2, 2000 und/oder innerhalb der der dynamoelektrischen Maschine 1 bzw. der diese dynamoelektrischen Maschine 1 umfassenden Antriebsmaschine zu simulieren, ohne wirkliche Versuche durchführen zu müssen.

Es ist ersichtlich, dass Abänderungen und/oder Hinzufügungen von Teilen an der zuvor beschriebenen Antriebswelle, an ihrem Herstellungsverfahren oder an der dynamoelektrischen Maschine erfolgen können, ohne dass vom Gebiet und Umfang der vorliegenden Erfindung abgewichen wird. Ebenfalls ersichtlich ist, dass die Erfindung zwar in Bezug auf einige konkrete Beispiele beschrieben worden ist, ein Fachmann jedoch sicher in der Lage sein sollte, viele andere entsprechende Formen einer Antriebswelle, ihres Herstellungsverfahrens oder einer dynamoelektrischen Maschine zu erhalten, die die in den Ansprüchen dargelegten Eigenschaften aufweisen und damit alle in den dadurch festgelegten Schutzumfang fallen.

Die Bezugszeichen in den Ansprüchen dienen lediglich zum besseren Verständnis der vorliegenden Erfindung und bedeuten auf keinen Fall eine Beschränkung der vorliegenden Erfindung.

## Patentansprüche

1. Antriebswelle (2, 2000) einer dynamoelektrischen Maschine (1) umfassend mindestens zwei unterschiedliche, voneinander thermisch getrennte Wärmeleitungs-Pfade (20, 21, 2001, 2002, 2003, 2004, 2005), wobei jeder Wärmeleitungs-Pfad (20, 21, 2001, 2002, 2003, 2004, 2005) zwei räumlich voneinander getrennte Enden (200, 201, 210, 211) aufweist und derart ausgebildet ist, dass Wärme in eines der beiden Enden (200, 210) in die Antriebswelle (2) einkoppeln und aus dem anderen Ende (201, 211) aus der Antriebswelle (2, 2000) auskoppeln kann, **dadurch gekennzeichnet, dass** die Wärmeleitungs-Pfade (20, 21, 2001, 2002, 2003, 2004, 2005) durch wenigstens eine Schicht (22) voneinander thermisch getrennt sind, wobei jede Schicht (22) ein Material umfasst, dessen Wärmeleitfähigkeit schlechter als die Wärmeleitfähigkeit der Wärmeleitungs-Pfade (20, 21, 2001, 2002, 2003, 2004, 2005) ist, wobei die Wärmeleitungs-Pfade (20, 21, 2001, 2002, 2003, 2004, 2005) und die wenigstens eine Schicht (22) mit einem Additive-Manufacturing-Verfahren hergestellt sind.

2. Antriebswelle nach Anspruch 1, wobei ein erstes Ende (200, 201) eines jeden Wärmeleitungs-Pfads (20, 21, 2001, 2002, 2003, 2004, 2005) an eine Wärmequelle (3, 4) und ein zweites Ende (210, 211) dieses Wärmeleitungs-Pfads (20, 21) an eine Wärmesenke (5, 6) thermisch ankoppelbar ist, wobei die unterschiedlichen Wärmequellen (3, 4) an die unterschiedlichen Wärmeleitungs-Pfade (20, 21, 2001, 2002, 2003, 2004, 2005) thermisch ankoppelbar sind und die Wärmequellen (3, 4) eine höhere Temperatur als die Wärmesenke (5,6) aufweisen.

3. Antriebswelle nach einem der Ansprüche 1 oder 2, wobei zumindest einer der Wärmeleitungs-Pfade (20, 21, 2001, 2002, 2003, 2004, 2005) eine monolithische Struktur bildet, wobei vorzugsweise jeder Wärmeleitungs-Pfad (20, 21, 2001, 2002, 2003, 2004, 2005) monolithisch ausgebildet ist.

4. Antriebswelle nach einem der Ansprüche 1 bis 3, wobei die Wärmeleitungs-Pfade (20, 21, 2001, 2002, 2003, 2004, 2005) koaxial angeordnet sind.

5. Antriebswelle nach einem der Ansprüche 1 bis 4, wobei jeder Wärmeleitungs-Pfad (2001, 2002, 2003, 2004, 2005) im Querschnitt in etwa die Form eines Kreissegments, eines Ringsegments, oder eines Kreisringsegments aufweist.

6. Antriebswelle nach einem der Ansprüche 1 bis 5, wobei die Antriebswelle (2, 2000) eine thermische Blockade (28) aufweist, die einen Wärmefluss in Axialrichtung (X) zwischen einem ersten Teil (29) der Antriebswelle (2, 2000) und einem zweiten Teil (30) der Antriebswelle (2, 2000) verhindert.

7. Dynamoelektrische Maschine mit mindestens einer Antriebswelle nach einem der Ansprüche 1 bis 6.

8. Maschine nach Anspruch 7 mit mindestens zwei Wärmequellen (3, 4) und mindestens einer Wärmesenke (5, 6), wobei die Wärmequellen (3, 4) unterschiedliche Temperaturen aufweisen, wobei die unterschiedlichen Wärmequellen an die unterschiedlichen, voneinander thermisch getrennten Wärmeleitungs-Pfade (20 ,21, 2001, 2002, 2003, 2004, 2005) derart thermisch gekoppelt sind, dass die Wärme von den unterschiedlichen Wärmequellen (3, 4) entlang der unterschiedlichen Wärmeleitungs-Pfade (20 ,21, 2001, 2002, 2003, 2004, 2005) isoliert zu der mindestens einen Wärmesenke (5, 6) fließen kann.

9. Maschine nach Anspruch 8, wobei mindestens eine der Wärmequellen als ein Rotorabschnitt (3) oder als ein Lager (4) ausgebildet ist und/oder die Wärmesenke als ein Lüfter (5) oder ein Wärmetauscher ausgebildet ist und/oder Kühlmedium (6) umfasst.

10. Maschine nach Anspruch 8 oder 9, wobei die Maschine (1) ferner eine Wärme-Trennvorrichtung (7) umfasst, wobei die Wärme-Trennvorrichtung (7) derart ausgebildet und an der Antriebswelle (2, 2000) derart angeordnet ist, dass die Wärme nach dem Auskoppeln aus den unterschiedlichen Wärmeleitungs-Pfaden (20, 21, 2001, 2002, 2003, 2004, 2005) weiter entlang voneinander thermisch isolierter Pfade von der Maschine (1) abfließen kann.

11. Antriebsmaschine oder -system umfassend mindestens eine dynamoelektrische Maschine (1) nach einem der Ansprüche 7 bis 10.

12. Verfahren zur Herstellung einer Antriebswelle (2, 2000) nach einem der Ansprüche 1 bis 6 für eine dynamoelektrische Maschine nach einem der Ansprüche 7 bis 10, wobei das Verfahren folgende Schritte umfasst:
- Rechnergestütztes Konstruieren eines dreidimensionalen Modells einer Antriebswelle (2, 2000) nach einem der Ansprüche 1 bis 6 aufgrund einer Verteilung von Wärmequellen (3, 4) und vorzugsweise -senke(n) (5, 6) einer dynamoelektrischen Maschine (1) nach einem der Ansprüche 7 bis 10 entlang der Antriebswelle (2, 2000);
- Herstellen der Antriebswelle (2, 2000) gemäß dem konstruierten dreidimensionalen Modell mittels eines Additive-Manufacturing- beziehungsweise eines 3D-Druck-Verfahrens.

13. Computerprogramm, welches ein digitalisiertes Abbild umfasst, wobei das digitalisierte Abbild zum Simulieren einer Antriebswelle (2, 2000) nach einem der Ansprüche 1 bis 6 oder einer dynamoelektrischen Maschine nach einem der Ansprüche 7 bis 10 konfiguriert ist.

14. Digitaler Zwilling einer dynamoelektrischen Maschine (1) nach einem der Ansprüche 7 bis 10 oder einer Antriebsmaschine nach Anspruch 11 oder eines Antriebssystems nach Anspruch 11.

15. Digitaler Zwilling umfassend ein digitalisiertes Abbild einer Antriebswelle (2, 2000) nach einem der Ansprüche 1 bis 6.

## Claims

1. Drive shaft (2, 2000) of a dynamoelectric machine (1) comprising at least two different heat conduction paths (20, 21, 2001, 2002, 2003, 2004, 2005) that are thermally separate from one another, wherein each heat conduction path (20, 21, 2001, 2002, 2003, 2004, 2005) has two physically separate ends (200, 201, 210, 211) and is embodied such that heat can couple into the drive shaft (2) at one of the two ends (200, 210) and can couple out of the drive shaft (2, 2000) at the other end (201, 211),
**characterised in that** the heat conduction paths (20, 21, 2001, 2002, 2003, 2004, 2005) are thermally separate from one another by at least one layer (22), wherein each layer (22) comprises a material with thermal conductivity that is worse than the thermal conductivity of the heat conduction paths (20, 21, 2001, 2002, 2003, 2004, 2005), wherein the heat conduction paths (20, 21, 2001, 2002, 2003, 2004, 2005) and the at least one layer (22) are manufactured by an additive manufacturing method.

2. Drive shaft according to claim 1, wherein a first end (200, 201) of each heat conduction path (20, 21, 2001, 2002, 2003, 2004, 2005) can be thermally coupled to a heat source (3, 4) and a second end (210, 211) of this heat conduction path (20, 21) can be thermally coupled to a heat sink (5, 6), wherein the different heat sources (3, 4) can be thermally coupled to the different heat conduction paths (20, 21, 2001, 2002, 2003, 2004, 2005) and the heat sources (3, 4) have a higher temperature than the heat sink (5, 6).

3. Drive shaft according to one of claims 1 or 2, wherein at least one of the heat conduction paths (20, 21, 2001, 2002, 2003, 2004, 2005) forms a monolithic structure, wherein preferably each heat conduction path (20, 21, 2001, 2002, 2003, 2004, 2005) is embodied as monolithic.

4. Drive shaft according to one of claims 1 to 3, wherein the heat conduction paths (20, 21, 2001, 2002, 2003, 2004, 2005) are arranged coaxially.

5. Drive shaft according to one of claims 1 to 4, wherein, in cross section, each heat conduction path (2001, 2002, 2003, 2004, 2005) has approximately the shape of a segment of a circle, a segment of a ring, or a segment of an annulus.

6. Drive shaft according to one of claims 1 to 5, wherein the drive shaft (2, 2000) has a thermal block (28), which prevents heat flow in the axial direction (X) between a first part (29) of the drive shaft (2, 2000) and a second part (30) of the drive shaft (2, 2000).

7. Dynamoelectric machine with at least one drive shaft according to one of claims 1 to 6.

8. Machine according to claim 7 with at least two heat sources (3, 4) and at least one heat sink (5, 6), wherein the heat sources (3, 4) have different temperatures, wherein the different heat sources are thermally coupled to the different heat conduction paths (20, 21, 2001, 2002, 2003, 2004, 2005) that are thermally separate from one another in such a way that heat from the different heat sources (3, 4) is able to flow along the different heat conduction paths (20, 21, 2001, 2002, 2003, 2004, 2005) to the at least one heat sink (5, 6) in an insulated manner.

9. Machine according to claim 8, wherein at least one of the heat sources is embodied as a rotor section (3) or as a bearing (4) and/or the heat sink is embodied as a fan (5) or a heat exchanger and/or comprises a cooling medium (6).

10. Machine according to claim 8 or 9, wherein the machine (1) further comprises a heat-separating apparatus (7), wherein the heat-separating apparatus (7) is embodied and arranged on the drive shaft (2, 2000) in such a way that, after decoupling from the different heat conduction paths (20, 21, 2001, 2002, 2003, 2004, 2005), heat can continue to flow away from the machine (1) along paths that are thermally insulated from one another.

11. Driving machine or system comprising at least one dynamoelectric machine (1) according to one of claims 7 to 10.

12. Method for manufacturing a drive shaft (2, 2000) according to one of claims 1 to 6 for a dynamoelectric machine according to one of claims 7 to 10, wherein the method comprises the following steps:
- computer-aided design of a three-dimensional model of a drive shaft (2, 2000) according to one of claims 1 to 6 based on a distribution of heat sources (3, 4) and preferably sinks(s) (5, 6) of a dynamoelectric machine (1) according to one of claims 7 to 10 along the drive shaft (2, 2000);
- manufacturing the drive shaft (2, 2000) according to the three-dimensional model design by means of an additive-manufacturing method or a 3D printing method.

13. Computer program comprising a digitised image, wherein the digitised image is configured to simulate a drive shaft (2, 2000) according to one of claims 1 to 6 or a dynamoelectric machine according to one of claims 7 to 10.

14. Digital twin of a dynamoelectric machine (1) according to one of claims 7 to 10 or a driving machine according to claim 11 or a drive system according to claim 11.

15. Digital twin comprising a digitised image of a drive shaft (2, 2000) according to one of claims 1 to 6.

## Revendications

1. Arbre (2, 2000) d'entraînement d'une machine (1) dynamoélectrique comprenant au moins deux chemins (20, 21, 2001, 2002, 2003, 2004, 2005) de conduction de la chaleur différents, séparés thermiquement les uns des autres, dans lequel chaque chemin (20, 21, 2001, 2002, 2003, 2004, 2005) de conduction de la chaleur a deux bouts (200, 201, 210, 211), séparés l'un de l'autre dans l'espace, et est constitué de manière à ce que de la chaleur puisse, dans l'un des deux bouts (200, 210), entrer dans l'arbre (2) d'entraînement et sortir de l'arbre (2, 2000) d'entraînement par l'autre bout (201, 211), **caractérisé en ce que** les chemins (20, 21, 2001, 2002, 2003, 2004, 2005) de conduction de la chaleur sont séparés thermiquement les uns des autres par au moins une couche (22), dans lequel chaque couche (22) comprend un matériau, dont la conductibilité thermique est plus mauvaise que le conductibilité thermique des chemins (20, 21, 2001, 2002, 2003, 2004, 2005) de conduction de la chaleur, dans lequel les chemins (20, 21, 2001, 2002, 2003, 2004, 2005) de conduction de la chaleur et la au moins une couche (22) sont fabriqués par un procédé de fabrication additive.

2. Arbre d'entraînement suivant la revendication 1, dans lequel un premier bout (200, 201) d'un chemin (20, 21, 2001, 2002, 2003, 2004, 2005) de conduction de la chaleur peut être couplé thermiquement à une source (3, 4) de chaleur et un deuxième bout (210, 211) de ce chemin (20, 21) de conduction de la chaleur a un puits (5, 6) de chaleur, dans lequel les différentes sources (3, 4) de chaleur peuvent être couplées thermiquement aux différents chemins (20, 21, 2001, 2002, 2003, 2004, 2005) de conduction de la chaleur et les sources (3, 4) de chaleur ont une température plus haute que le puits (5, 6) de chaleur.

3. Arbre d'entraînement suivant l'une des revendications 1 ou 2, dans lequel au moins l'un des chemins (20, 21, 2001, 2002, 2003, 2004, 2005) de conduction de la chaleur forme une structure monolithique, dans lequel, de préférence chaque chemin (20, 21, 2001, 2002, 2003, 2004, 2005) de conduction de la chaleur est constitué monolithiquement.

4. Arbre d'entraînement suivant l'une des revendications 1 à 3, dans lequel les chemins (20, 21, 2001, 2002, 2003, 2004, 2005) de conduction de la chaleur sont disposés coaxialement.

5. Arbre d'entraînement suivant l'une des revendications 1 à 4, dans lequel chaque chemin (2001, 2002, 2003, 2004, 2005) de conduction de la chaleur a, en section transversale, à peu près la forme d'un segment de cercle, d'un segment annulaire ou d'un segment d'anneau de cercle.

6. Arbre d'entraînement suivant l'une des revendications 1 à 5, dans lequel l'arbre (2, 2000) d'entraînement a un blocus (28) thermique, qui empêche un flux de chaleur dans la direction (X) axiale entre une première partie (29) de l'arbre (2, 2000) d'entraînement et une deuxième partie (30) de l'arbre (2, 2000) d'entraînement.

7. Machine dynamoélectrique comprenant au moins un arbre d'entraînement suivant l'une des revendications 1 à 6.

8. Machine suivant la revendication 7 comprenant au moins deux sources (3, 4) de chaleur et au moins un puits (5, 6) de chaleur, dans laquelle les sources (3, 4) de chaleur ont des températures différentes, dans laquelle les différentes sources de chaleur sont couplées thermiquement aux différents chemins (20, 21, 2001, 2002, 2003, 2004, 2005) de conduction de la chaleur, séparés thermiquement les uns des autres, de manière à ce que la chaleur puisse passer des différentes sources (3, 4) de chaleur le long des différents chemins (20, 21, 2001, 2002, 2003, 2004, 2005) de conduction de la chaleur, de manière isolée, à au moins un puits (5, 6) de chaleur.

9. Machine suivant la revendication 8, dans laquelle au moins l'une des sources de chaleur est constituée sous la forme d'un tronçon (3) de rotor ou d'un palier (4) et/ou le puits de chaleur est constitué en ventilateur (5) ou en échangeur de chaleur et/ou comprend un fluide (6) réfrigérant.

10. Machine suivant la revendication 8 ou 9, dans laquelle la machine (1) comprend en outre un dispositif (7) de séparation de la chaleur, dans laquelle le dispositif (7) de séparation de la chaleur est constitué et est disposé sur l'arbre (2, 2000) d'entraînement, de manière à ce que la chaleur puisse, après le découplage des différents chemins (20, 21, 2001, 2002, 2003, 2004, 2005) de conduction de la chaleur, continuer à s'évacuer de la machine (1) suivant des chemins isolés thermiquement les uns des autres.

11. Machine ou système d'entraînement comprenant au moins une machine (1) dynamoélectrique suivant l'une des revendications 7 à 10.

12. Procédé de fabrication d'un arbre (2, 2000) d'entraînement suivant l'une des revendications 1 à 6 pour une machine dynamoélectrique suivant l'une des revendications 7 à 10, dans lequel le procédé comprend les stades suivants :
- construction assistée par ordinateur d'un modèle en trois dimensions d'un arbre (2, 2000) d'entraînement suivant l'une des revendications 1 à 6, sur la base d'une répartition de sources (3, 4) de chaleur et, de préférence d'un ou de puits (5, 6) de chaleur d'une machine (1) dynamoélectrique suivant l'une des revendications 7 à 10 le long de l'arbre (2, 2000) d'entraînement ;
- fabrication de l'arbre (2, 2000) d'entraînement suivant le modèle en trois dimensions reconstruit au moyen d'un procédé de fabrication additive ou respectivement d'un procédé d'impression en 3D.

13. Programme d'ordinateur, qui comprend une représentation numérisée, dans lequel la représentation numérisée est configurée pour simuler un arbre (2, 2000) d'entraînement suivant l'une des revendications 1 à 6 ou une machine dynamoélectrique suivant l'une des revendications 7 à 10.

14. Double numérique d'une machine (1) dynamoélectrique suivant l'une des revendications 7 à 10 ou d'une machine d'entraînement suivant la revendication 11 ou d'un système d'entraînement suivant la revendication 11.

15. Double numérique comprenant une représentation numérisée d'un arbre (2, 2000) d'entraînement suivant l'une des revendications 1 à 6.
